(19)

**Europäisches Patentamt**
**European Patent Office**
**Office européen des brevets**

(11) **EP 4 386 430 B1**

(12) **EUROPEAN PATENT SPECIFICATION**

(45) Date of publication and mention
of the grant of the patent:
**24.12.2025 Bulletin 2025/52**

(21) Application number: **22214258.0**

(22) Date of filing: **16.12.2022**

(51) International Patent Classification (IPC):
*G01S 7/41* (2006.01)    *G01S 13/90* (2006.01)
*G06F 18/22* (2023.01)   *G06T 7/73* (2017.01)

(52) Cooperative Patent Classification (CPC):
**G01S 7/417; G01S 13/9027; G06T 7/74;**
G06T 2207/10044; G06T 2207/20081;
G06T 2207/20084; G06V 10/82; G06V 20/13;
G06V 20/17

(54) **GEOLOCATION ERROR DETECTION METHOD AND SYSTEM FOR SYNTHETIC APERTURE RADAR IMAGES**

VERFAHREN UND SYSTEM ZUR ERKENNUNG VON GEOLOKALISIERUNGSFEHLERN FÜR RADARBILDER MIT SYNTHETISCHER APERTUR

PROCÉDÉ ET SYSTÈME DE DÉTECTION D'ERREUR DE GÉOLOCALISATION POUR DES IMAGES RADAR À SYNTHÈSE D'OUVERTURE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**19.06.2024 Bulletin 2024/25**

(73) Proprietor: **Iceye Oy**
**02150 Espoo (FI)**

(72) Inventors:
• **Ali, Muhammad Irfan**
**02150 Espoo (FI)**
• **Almaksour, Abdullah**
**02150 Espoo (FI)**
• **Vinholi, João**
**02150 Espoo (FI)**

(74) Representative: **Crowell & Moring U.K. LLP**
**199 Bishopsgate**
**London EC2M 3TY (GB)**

(56) References cited:
CN-A- 110 827 332    CN-A- 112 200 845
CN-A- 115 170 406

• **HUANG XUEJUN ET AL: "Unsupervised Image Registration for Video SAR", IEEE JOURNAL OF SELECTED TOPICS IN APPLIED EARTH OBSERVATIONS AND REMOTE SENSING, IEEE, USA, vol. 14, 21 October 2020 (2020-10-21), pages 1075 - 1083, XP011829969, ISSN: 1939-1404, [retrieved on 20210106], DOI: 10.1109/ JSTARS.2020.3032464**
• **WANG SHUANG ET AL: "A deep learning framework for remote sensing image registration", ISPRS JOURNAL OF PHOTOGRAMMETRY AND REMOTE SENSING, AMSTERDAM [U.A.] : ELSEVIER, AMSTERDAM, NL, vol. 145, 5 January 2018 (2018-01-05), pages 148 - 164, XP085499056, ISSN: 0924-2716, DOI: 10.1016/J.ISPRSJPRS.2017.12.012**
• **JABER MUSTAFA MUSA ET AL: "A Machine Learning-Based Semantic Pattern Matching Model for Remote Sensing Data Registration", JOURNAL OF THE INDIAN SOCIETY OF REMOTE SENSING, vol. 50, no. 12, 6 September 2022 (2022-09-06), India, pages 2303 - 2316, XP093050326, ISSN: 0255-660X, Retrieved from the Internet <URL:https://link.springer.com/ article/10.1007/s12524-022-01604-w/fulltext. html> DOI: 10.1007/s12524-022-01604-w**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 386 430 B1

**Description**

TECHNICAL FIELD

The present disclosure is directed at a geolocation error detection method and system for synthetic aperture radar images.

BACKGROUND

Synthetic aperture radar (SAR) images are a type of image captured by transmitting and measuring reflections of radar signals. More particularly, SAR images are typically acquired from an aerial transmitter and receiver, such as a transmitter that comprises part of an airplane or a satellite. In conventional radar, the resolution of an image generated by measuring reflections of a radar signal is directly proportional to the wavelength of the radar signal and, consequently, the length of the antenna used to transmit and receive the radar signal. This means that the length of the antenna that would be required to capture high resolution images using conventional radar is often impractical, particularly for airborne use.

In contrast, SAR images are captured using a "synthetic aperture". A shorter and consequently more practical antenna is used to make a series of measurements of reflected radar signals, and those measurements are combined to simulate a much larger antenna. Consequently, the resolution of a SAR image corresponds to the resolution of a conventional radar image captured using an antenna much larger than the one used to capture the SAR image.

XP11829969A Unsupervised Image Registration for Video SAR discloses an unsupervised image registration approach for video SAR moving target detection.

XP08549056 A deep learning framework for remote sensing image registration discloses an effective deep neural network aiming at remote sensing image registration problem. Unlike conventional methods doing feature extraction and feature matching separately, the network pairs patches from sensed and reference images, and then learn the mapping directly between these patch-pairs and their matching labels for later registration.

CN 115170406 A describes a high-precision fusion method for an optical image and an SAR (Synthetic Aperture Radar) intensity image, which comprises the following steps of: establishing an image coordinate system, determining the position of each pixel of two data sources, calculating the deviation between the SAR image and a basic map optical image, achieving sub-pixel-level registration precision by using a spectral diversity method, reducing fusion fuzziness, and enabling the SAR and optical registration precision to be less than 0.1 pixel.

XP093050326 A Machine Learning-Based Semantic Pattern Matching Model for Remote Sensing Data Registration describes a system that captures the semantic distribution location of the matching reference picture, which ML mapped using learning-based algorithms. The affine invariant is utilized to determine the semantic template's barycenter position and the pixel's center, which changes the semantic border alignment problem into a point-to-point matching issue for the machine learning-based semantic pattern matching (ML-SPM) model.

CN 110827332 A describes an invention relating to the field of SAR image registration methods based on a convolutional neural network, and the method comprises the following steps: obtaining an SAR reference image and a to-be-registered SAR real-time image, and enabling the real-time image and the reference image to be two images in the same region; performing noise reduction processing on the reference image by using a BNLMF filter algorithm, extracting SIFT feature points, constructing a training data set, training an AlexNet convolutional network, and obtaining a network model; denoising the real-time image to be registered by using a BNLMF filter algorithm, extracting SIFT feature points, and constructing a sample set of the real-time image; and inputting the sample set of the real-time graph into a trained AlexNet convolutional network model, predicting a matching relationship, and obtaining an initial matching feature point pair.

CN 112200845 A describes an image registration method and device, and the method comprises the steps: obtaining a plurality of remote sensing images, and determining a reference image and a to-be-registered image from the plurality of remote sensing images; respectively extracting a first region feature map of the reference image and a second region feature map of the to-be-registered image through a trained feature extraction model; based on information entropy, performing iterative registration on the first region feature map and the second region feature map according to a preset similarity measurement function to obtain an optimal transformation parameter matrix; and adopting the optimal transformation parameter matrix to perform registration on the image to be registered, so that a registered image can be obtained.

SUMMARY

The present invention provides a method for detecting geolocation error in a synthetic aperture radar (SAR) image, the method comprising:

    (a) obtaining the SAR image purportedly depicting a geographical area;

(b) obtaining at least one reference image of the geographical area, wherein the at least one reference image comprises a first reference image;

(c) inputting data based on the SAR image and the at least one reference image into an artificial neural network trained as a classifier to determine that the SAR image and the reference image are of different areas, wherein the inputting comprises:

(i) generating a difference image representing a difference between the SAR image and the first reference image; and

(ii) inputting the difference image into the artificial neural network; and

(d) detecting the geolocation error as a result of the artificial neural network determining that the SAR image and the at least one reference image are of different areas.

The at least one reference image may comprise a first reference image. The inputting may comprise: generating a difference image representing a difference between the SAR image and the first reference image; and inputting the difference image into the artificial neural network. Alternatively, the inputting may comprise inputting the SAR image and the at least one reference image into the artificial neural network.

The at least one reference image may comprise a first reference image and a second reference image. The second reference image may comprise a difference image representing a difference between the SAR image and the first reference image.

The method may further comprise: generating a three-band, false color composite image from the SAR image and the first and second reference images; and inputting the SAR image and the at least one reference image into the artificial neural network by inputting the false color composite image into the artificial neural network.

The artificial neural network may comprise a convolutional neural network.

Obtaining the SAR image and the at least one reference image may comprise respectively selecting the SAR image as a SAR tile and the at least one reference image as at least one reference tile from one or more larger images.

The one or more larger images may comprise a first ground range detected image from which the SAR tile is selected and a second ground range detected image from which a first reference tile of the at least one reference tile is selected.

The SAR tile may comprise less than a background area limit of background area. A digital elevation model (DEM) tile, selected from a larger DEM image and corresponding in location to the SAR tile and first reference tile, may comprise no more than a first elevation limit representing portions of the DEM tile greater than an upper elevation threshold. The DEM tile may comprise at most a second elevation limit representing portions of the DEM tile lower than a lower elevation threshold.

The background area limit may be approximately 10% of the SAR tile, the first elevation limit may be approximately 5% of the DEM tile, the upper elevation threshold may be approximately 20 meters more than an average scene height of the DEM image, the second elevation limit may be approximately 80% of the DEM tile, and the lower elevation threshold may be approximately 30 meters less than the average scene height of the DEM image.

The SAR tile, the first reference tile, and the DEM tile may respectively share a tile index indexing a location of the SAR tile, the first reference tile, and the DEM tile. The method may further comprise: determining a tile score for the tile index, comprising: determining a first score term from a backscatter value of the first reference tile, wherein a first weight is assigned to the first score term when the backscatter value for a percentage of the first reference tile is within a backscatter range and a second weight is otherwise assigned to the first score term, wherein the first weight is higher than the second weight; determining a tile index weight, wherein a first value is assigned to the tile index weight if either: a mean value of the first reference tile is less than a mean value of the second ground range detected image; a mean value of the SAR tile is less than a mean value of the first ground range detected image, and wherein a second value is otherwise assigned to the tile index weight, wherein the second value is higher than the first value; determining a coefficient of variation for the SAR tile; determining a coefficient of variation for the first reference tile; and determining the tile score for the tile index as the first score term added to a sum of the coefficient variation for the SAR tile and the coefficient of variation for the first reference tile, wherein the sum is weighted by the tile index weight; comparing the tile score against tile scores for other respective tile indices of tiles selected from the first ground range detected image, the second ground range detected image, and the DEM image; and determining that the tile score for the tile index is above a minimum score percentile for all of the tile scores.

The minimum score percentile may be approximately the 60th percentile.

The first weight may be approximately 99, the backscatter range may be less than approximately 5 dB, the percentage of the first reference tile may be between approximately 20% and approximately 80%, the second weight may be approximately 1, the first value may be approximately 0, and the second value may be approximately 1.

The method may further comprise generating and displaying a heat map. The heat map may comprise a color corresponding to the geolocation error of the SAR tile overlaid on the larger image from which the SAR tile is selected.

The SAR image may comprise an X-band SAR image and the at least one reference image may comprise a C-band SAR image.

According to another aspect, there is provided a method for training an artificial neural network to classify geolocation error in a test synthetic aperture radar (SAR) image, the method comprising: obtaining a training SAR image, wherein the training SAR image has a known geolocation error relative to a geographical area purportedly depicted by the training SAR image; obtaining at least one training reference image of the geographical area; and training an artificial neural network to classify the geolocation error in the test SAR image using the training SAR image, the at least one training reference image, and the known geolocation error.

The using may comprise generating a difference image representing a difference between the SAR image and the first reference image; and inputting the difference image into the artificial neural network. Alternatively, the using may comprise inputting the SAR image and the at least one reference image into the artificial neural network.

The at least one training reference image may comprise a first training reference image and a second training reference image. The second training reference image may comprise a difference image representing a difference between the training SAR image and the first training reference image.

The method may further comprise: generating a three-band, false color composite image from the training SAR image and the first and second training reference images; and inputting the training SAR image and the at least one training reference image into the artificial neural network by inputting the false color composite image into the artificial neural network.

The artificial neural network may comprise a convolutional neural network.

Obtaining the training SAR image and the at least one training reference image may comprise respectively selecting the training SAR image as a training SAR tile and the at least one training reference image as at least one training reference tile from one or more larger images.

The one or more larger images may comprise a first ground range detected image from which the training SAR tile is selected and a second ground range detected image from which a first training reference tile is selected.

The training SAR tile may comprise less than a background area limit of background area. A training digital elevation model (DEM) tile, selected from a larger DEM image and corresponding in location to the trailing SAR tile and first training reference tile, may comprise no more than a first elevation limit representing portions of the training DEM tile greater than an upper elevation threshold. The training DEM tile may comprise at most a second elevation limit representing portions of the training DEM tile lower than a lower elevation threshold.

The background area limit may be approximately 10% of the training SAR tile, the first elevation limit may be approximately 5% of the training DEM tile, the upper elevation threshold may be approximately 20 meters more than an average scene height of the DEM image, the second elevation limit may be approximately 80% of the training DEM tile, and the lower elevation threshold may be approximately 30 meters less than the average scene height of the DEM image.

The training SAR tile, the first training reference tile, and the training DEM tile may respectively share a tile index indexing a location of the training SAR tile, the first training reference tile, and the training DEM tile. The method may further comprise: determining a tile score for the tile index, comprising: determining a first score term from a backscatter value of the first training reference tile, wherein a first weight is assigned to the first score term when the backscatter value for a percentage of the first training reference tile is within a backscatter range and a second weight is otherwise assigned to the first score term, wherein the first weight is higher than the second weight; determining a tile index weight, wherein a first value is assigned to the tile index weight if either: a mean value of the first training reference tile is less than a mean value of the second ground range detected image; a mean value of the training SAR tile is less than a mean value of the first ground range detected image, and wherein a second value is otherwise assigned to the tile index weight, wherein the second value is higher than the first value; determining a coefficient of variation for the training SAR tile; determining a coefficient of variation for the first training reference tile; and determining the tile score for the tile index as the first score term added to a sum of the coefficient variation for the training SAR tile and the coefficient of variation for the first training reference tile, wherein the sum is weighted by the tile index weight; comparing the tile score against tile scores for other respective tile indices of the tiles selected from the first ground range detected image, the second ground range detected image, and the DEM image; and determining that the tile score for the tile index is above a minimum score percentile for all of the tile scores.

The minimum score percentile may be approximately the 60th percentile.

The first weight may be approximately 99, the backscatter range may be less than approximately 5 dB, the percentage of the first training reference tile may be between approximately 20% and approximately 80%, the second weight may be approximately 1, the first value may be approximately 0, and the second value may be approximately 1.

The training may comprise applying transfer learning.

The training SAR image may comprise an X-band SAR image and the at least one reference image may comprise a C-band SAR image.

According to another aspect, there is provided an artificial neural network trained in accordance with the aspects of the method for training described above.

According to another aspect, there is provided a system comprising: a database storing a synthetic aperture radar (SAR) image and at least one reference image; and a processor communicative with the database and configured to perform any of the aspects of the methods described above.

According to another aspect, there is provided a non-transitory computer readable medium having stored thereon computer program code that is executable by a processor and that, when executed by the processor, causes the processor to perform any of the aspects of the methods described above.

This summary does not necessarily describe the entire scope of all aspects. Other aspects, features and advantages will be apparent to those of ordinary skill in the art upon review of the following description of specific embodiments.

BRIEF DESCRIPTION OF THE DRAWINGS

In the accompanying drawings, which illustrate one or more example embodiments:

FIG. 1 depicts a system for capturing synthetic aperture radar images.

FIG. 2 depicts a block diagram of a computer system that may be used to detect geolocation error in synthetic aperture radar images.

FIG. 3 depicts a logical block diagram of a geolocation error detection system, which may be implemented on the computer system of FIG. 2.

FIGS. 4A-4C depict histograms of training images used to train an artificial neural network comprising part of a geolocation error detection system.

FIGS. 5A-5H depict example tiles used as training images with high coefficients of variation.

FIGS. 6A and 6B depict example tiles used as training images with high numbers of edges.

FIGS. 7A and 7B depict an example SAR image (FIG. 7A) and corresponding tiles (FIG. 7B) selected for use in training from the SAR image.

FIGS. 8A and 8B depict an example SAR image (FIG. 8A) and corresponding tiles (FIG. 8B) selected for use in training from the SAR image, in which the corresponding tiles are shown in false composite colors resulting from use of transfer learning.

FIGS. 9A-9D depict an example SAR image (FIG. 9A), first reference image (FIG. 9B), difference image (FIG. 9C), and 3-band image (FIG. 9D) used during training of a convolutional neural network to perform geolocation error detection.

FIGS. 10A-10D depict an example SAR image (FIG. 10A), first reference image (FIG. 10B), difference image (FIG. 10C), and 3-band image (FIG. 10D) used during training of a convolutional neural network to perform geolocation error detection.

FIGS. 11A-11D depict an example SAR image (FIG. 11A), first reference image (FIG. 11B), difference image (FIG. 11C), and 3-band image (FIG. 11D) used during training of a convolutional neural network to perform geolocation error detection.

FIGS. 12A-12D depict an example SAR image (FIG. 12A), first reference image (FIG. 12B), difference image (FIG. 12C), and 3-band image (FIG. 12D) used during training of a convolutional neural network to perform geolocation error detection.

FIGS. 13A-13D depict example greyscale versions of false RGB composites depicting training images, generated by applying transfer learning, used during training of a convolutional neural network to perform geolocation error detection.

FIGS. 14A-14C depict an example SAR image (FIG. 14A), first reference image (FIG. 14B), and heat map highlighting tiles corresponding to geolocation error (FIG. 14C).

FIGS. 15A and 15B depict an example SAR image (FIG. 15A) and heat map highlighting tiles corresponding to geolocation error (FIG. 15B).

FIGS. 16A and 16B depict an example SAR image (FIG. 16A) and heat map highlighting tiles corresponding to geolocation error (FIG. 16B).

DETAILED DESCRIPTION

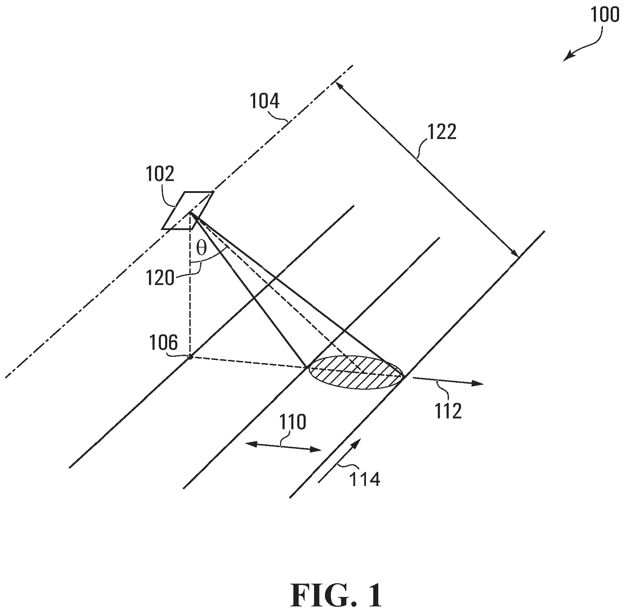

Referring now to FIG. 1, there is shown a system 100 for capturing synthetic aperture radar ("SAR") images. More particularly, FIG. 1 shows schematically how an aerial antenna 102 is used to capture SAR images. The antenna 102 may be satellite or airplane mounted, for example. The antenna 102 travels along a flight path 104, and directly below the antenna 102 is the nadir 106. The antenna 102 emits a radar signal at a look angle 120 that illuminates a swath 110 on the ground, which is offset from the nadir 106. The antenna 102 measures the radial line of sight distance between the antenna 102 and the surface along a slant range 122. FIG. 1 also shows a range direction 112 and an azimuth direction 114, with the range direction 112 extending perpendicularly away from the flight path 104, and the azimuth direction 114 extending parallel to the flight path 104. In respect of the range direction 112, the swath 110 is between points along the range direction 112 referred to as the near range and the far range.

When an SAR image is aerially captured, the image is typically geolocated to a particular position on the Earth. At a high level, accurate geolocation is useful for knowing what part of the Earth has been imaged in the SAR image. More particularly, accurate geolocation is useful for generating accurate real-time analytics, for conducting multitemporal image analysis, and for leveraging open source geospatial datasets.

Despite the benefits of accurate geolocation for SAR images, geolocation errors can occur. For example, in the context of a satellite-acquired SAR image, they may occur as a result of timing errors that occur on board the satellite; inaccurate knowledge of satellite orbit; errors in respect of star tracking, which can be used by the satellite to locate itself; and errors in the elevation model used to determine elevation of the surface being scanned.

In at least some embodiments herein, methods and systems for classifying geolocation error in a SAR image using an artificial neural network are disclosed, as well as methods and systems for appropriately training an artificial neural network to perform that classification. At testing/inference, a SAR image purportedly depicting a geographical area, and at least one reference image of the geographical area, are obtained. The SAR image and the at least one reference image may be selected as portions ("tiles") from one or more larger images. Data based on the SAR image and the at least one reference image are input into an artificial neural network, such as a convolutional neural network ("CNN"), that is trained as a classifier to determine whether the SAR image and the reference image are of different areas (i.e., that the SAR image suffers from geolocation error, and that consequently the actual location it depicts differs from its purported location). The data that is input into the artificial neural network may comprise, for example, a difference image generated as a pixel-level difference between the SAR image and the at least one reference image; alternatively, the SAR image and the at least one difference image themselves may be input into the artificial neural network. A geolocation error is detected when the artificial neural network determines that the SAR image and the at least one reference image are of different areas. The output of the artificial neural network may be an appropriate classification, such as a binary classification. For example, the artificial neural network may output a probability representative of the likelihood that the SAR image and the at least one reference image are of different areas, and a threshold may be set (e.g., 0.2) such that when the probability is above that threshold, the conclusion is that geolocation error is present and that when the probability is below that threshold, the conclusion is that geolocation error is absent.

Analogously, during training, a training SAR image, which has a known geolocation error relative to a geographical area purportedly depicted by the training SAR image, may be obtained in addition to at least one training reference image of the geographical area. The artificial neural network may then be trained to classify geolocation error in a test SAR image (i.e., an SAR image for which geolocation error is classified at inference) using the training SAR image, the at least one training reference image, and the known geolocation error.

As used herein, a "test" image refers to an image input to an artificial neural network at inference on which classification is performed, while a "training" image refers to an image input to an artificial neural network to train the network in order to perform that classification. A generic reference to an "image" may refer to a test and/or a training image, depending on the context.

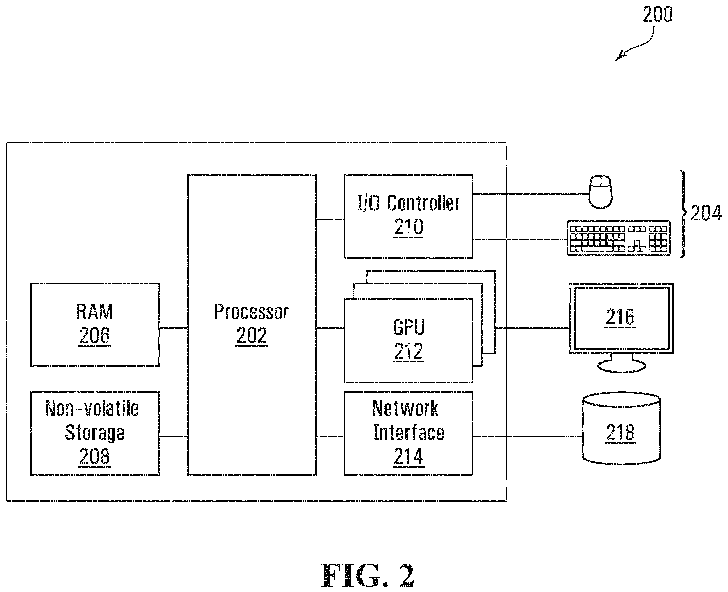

Referring now to FIG. 2, there is depicted an example embodiment of a computer system 200 that may be used to perform a method for geolocation error detection in a SAR image. The computer system 200 comprises a processor 202 that controls the computer system's 200 overall operation. The processor 202 is communicatively coupled to and controls several subsystems. These subsystems comprise an input/output ("I/O") controller 210, which is communicatively coupled to user input devices 204. The user input devices 204 may comprise, for example, any one or more of a keyboard, mouse, touch screen, and microphone. The subsystems further comprise random access memory ("RAM") 206, which stores computer program code for execution at runtime by the processor 202; non-volatile storage 208, which stores the computer program code executed by the RAM 206 at runtime; graphical processing units ("GPU") 212, which control a display 216 and which may be used to run one or more artificial neural networks in parallel; and a network interface 214, which facilitates network communications with a database 218, for example, which stores SAR and reference images for training and/or inference. The non-volatile storage 208 has stored on it computer program code that is loaded into the RAM 206 at runtime and that is executable by the processor 202. When the computer program code is executed by the processor 202, the processor 202 causes the computer system 200 to implement a method for geolocation error detection of SAR images, such as described further below. Additionally or alternatively, multiple of the computer systems 200 may be networked together and collectively perform that method using distributed computing.

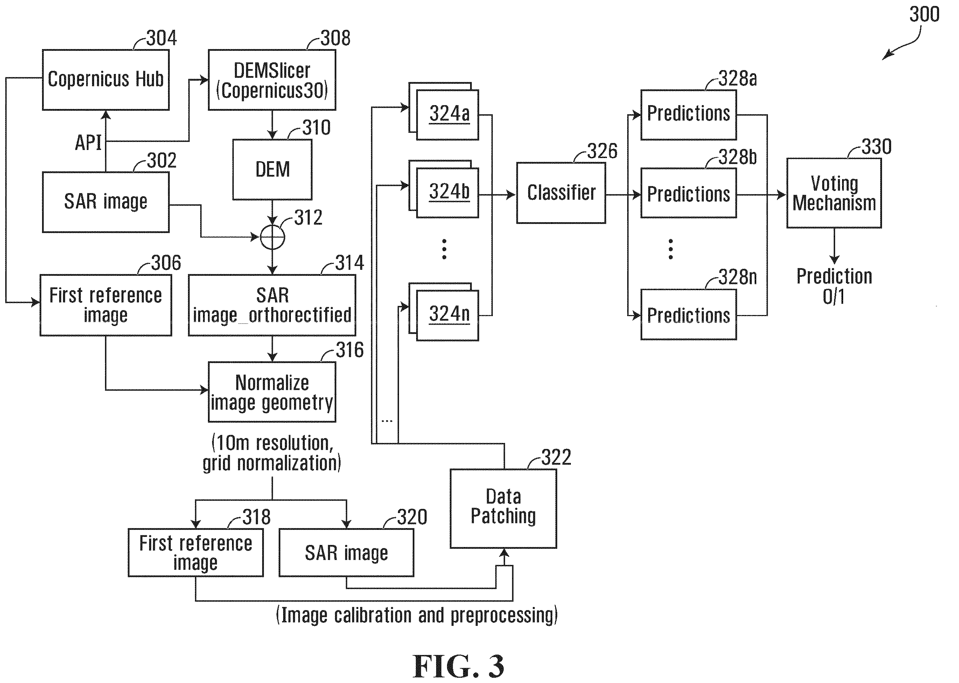

Referring now to FIG. 3, there is shown a logical block diagram of a geolocation error detection system 300, which may be implemented on the computer system 200 of FIG. 2, according to an example embodiment. The system 300 of FIG. 3 depicts a classifier 326 comprising a trained artificial neural network, such as a CNN, used to detect geolocation error. In at least some embodiments, the artificial neural network may be based on the EfficientNet™ or ResNet™ networks, the loss function may be a cross-entropy loss, and the Adam™ optimizer method may be used for optimization, for example.

In FIG. 3, an initial SAR image 302 is obtained. The initial SAR image 302 is a ground range detected ("GRD") image, which comprises SAR data that has been detected, multi-looked and projected to ground range. The initial SAR image 302 may be obtained from the database 218, for example, and be based on SAR data downloaded from a satellite (not depicted). The initial SAR image 302 is used to obtain two reference images via application programming interface ("API") calls: first, an API call is made to the Copernicus™ Open Access Hub 304 to obtain an initial first reference image 306 in the form of another GRD image from an SAR image dataset referred to as the Sentinel-1 dataset; second, another API call is made to the Copernicus DEMSlicer service 308 to obtain a digital elevation model ("DEM") image 310, which comprises elevation data. At block 312, the DEM image 310 is used to orthorectify the initial SAR image 302, to result in an orthorectified SAR image 314 (in this example embodiment, the initial first reference image 306 is retrieved from the Copernicus™ Open Access Hub 304 already orthorectified based on the same DEM image 310 used to orthorectify the SAR image 314, and consequently FIG. 3 does not show a separate orthorectification process for the initial first reference image 306). The initial first reference image 306 and the orthorectified SAR image 314 are normalized at block 316; in FIG. 3, the two images 306,314 are normalized to a 10 m resolution with normalized grids to result in the SAR image 320 and first reference image 318 to be used downstream for classification. The SAR image 320 and first reference image 318 may be used for training and classification purposes. Alternatively and as discussed further below, a third image in the form of a second reference image may also be used for training and classification purposes; this third image may comprise, for example, 1) a difference image generated as a pixel-level difference between the SAR image 320 and first reference image 318 or 2) the DEM image 310. However many images are used for training and classification, they may subsequently be input to the classifier 326 as separate images, or as different bands of a single image. Using a second reference image in the form of a difference image may assist with model convergence. In at least some example embodiments, the difference level image, which is determined from and consequently based on the SAR image 320 and the first reference image 318, may be the only image directly input into the classifier 326 and both training and classification may be performed by having the classifier 326 directly process the difference image as opposed to directly process the SAR image 320 and the first reference image 318.

When multiple SAR images are used as the initial SAR image 302 and the initial first reference image 306, those images may be selected from the same bandwidth range or from different bandwidth ranges. For example, the initial SAR image 302 may comprise an X-band (approximately 8-12 GHz) SAR image, and the initial first reference image 306 may comprise a C-band (approximately 4-8 GHz) SAR image. Additionally, while the Sentinel-1 dataset is used as a source of the initial first reference image 306 above, in at least some other embodiments different datasets may be used as image sources.

At block 322, portions of the first reference image 318 and SAR image 320 are selected for input to the classifier 326; these portions are hereinafter referred to as "tiles", and the process for selecting and ranking tiles is described in more detail below. While tiling is performed on two images in FIG. 3, in at least some other embodiments such as those described below, tiling may be performed on additional images such as the DEM image 310, a difference image, and/or a 3-band image. Tiling is performed because geospatial images, such as SAR images, are rich in content and often quite large. Consequently, it is not ideal to train an artificial neural network on a full-size geospatial image due to memory constraints and due to the fact that different portions of a large geospatial image can contain markedly different features, making it difficult for the neural network to be trained from the entire image as a single input. Tiles may accordingly be selected from the larger geospatial image, as described in more detail below. An example resolution of the larger geospatial image is 24,000 x 16,000 pixels, with a corresponding example tile resolution of 512 x 512 pixels or 1,024 x 1,024 pixels.

Tile pairs 324a-n result are output from block 322, and these tile pairs 324a-n are input to the classifier 326 for classification; in the depicted embodiment, processing is done by the GPUs 212 so the tile pairs 324a-n are input to the classifier in parallel, although in at least some other embodiments they may be input in series. The classifier 326 respectively outputs classifications in the form of predictions 328a-n for the tile pairs 324a-n, following which a voting mechanism 330 is applied to the predictions 328a-n to output a final binary output representative of whether geolocation error is present in the SAR image 320 from which the tile pairs 324a-n are selected. For example, the predictions 328a-n may comprise probabilities in the range of [0,1] representative of the likelihood that geolocation error is present in any given one of the tile pairs 324a-n. The voting mechanism may determine the mean of all the probabilities determined for each of the tile pairs 324a-n, and the mean may be used as the probability representative of the error for the larger SAR image 320. That mean probability may be compared to an error threshold (e.g., 0.5) whereby a probability higher than the threshold is interpreted as geolocation error being present and a probability lower than the threshold is interpreted as geolocation error being absent.

In other embodiments a different voting mechanism 330 may be used, or the voting mechanism 330 may be omitted entirely. For example, instead of determining the mean of the probabilities corresponding to the tile pairs 324a-n, a weighted average in which some of the tile pairs 324a-n are given more influence than others may be used. Alternatively, the voting mechanism 330 may be omitted entirely, and any geolocation error probability for any one of the tile pairs 324a-n that exceeds the error threshold may result in a conclusion that the entire SAR image 320 suffers from geolocation error. As another example, geolocation error may be determined on a per tile pair 324a-n basis; in other words, instead of using the voting mechanism 330 to determine a geolocation error for the larger SAR image 320 from which the tiles 324a-n are selected, geolocation error may simply be determined for each of the tile pairs 324a-n respectively based on the predictions 328a-n.

While the initial first reference image 306 in FIG. 3 is another SAR image, different types of images may be used as reference images. For example, in at least some other embodiments the one or more reference images may comprise satellite images (e.g., from Google Earth™), graphical depictions of maps (e.g., the OpenStreetMap™ project), maps of permanent water bodies such as rivers and lakes, maps of roads, and land use or cover maps.

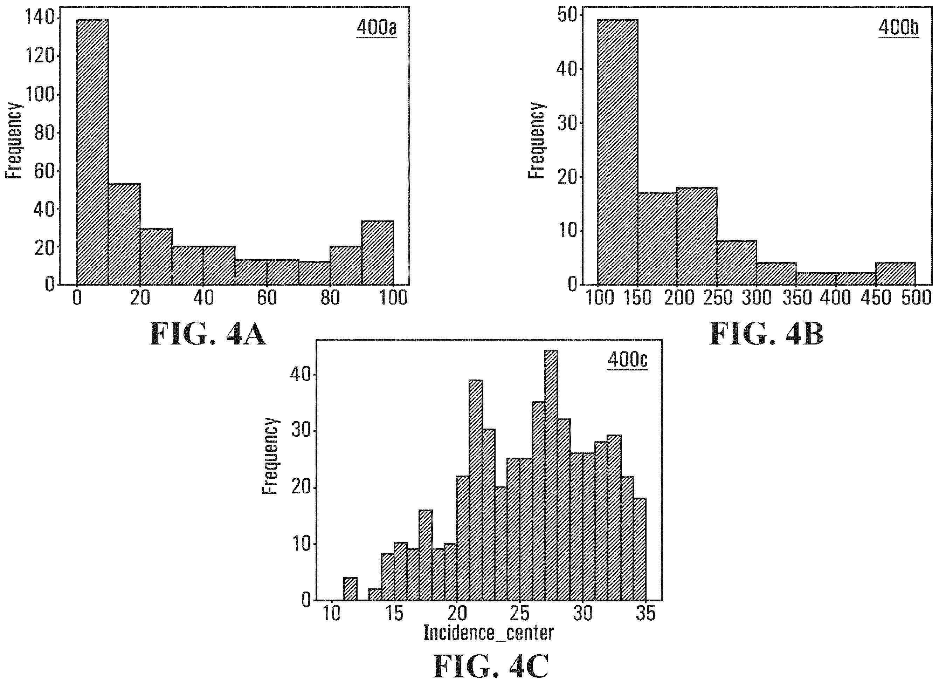

FIGS. 4A-4C depict histograms of 532 training images used to train an artificial neural network comprising part of the classifier 326, according to an example embodiment. In the presently described embodiment, the artificial neural network comprises a CNN. A first histogram 400a depicted in FIG. 4A shows the distribution of geolocation error for those training images with error of less than 100 m. A second histogram 400b depicted in FIG. 4B shows the distribution of geolocation error for those training images with error of more than 100 m and less than 500 m. And a third histogram 400c depicted in FIG. 4C depicts the distribution of training images by incidence center, which for an image is the look angle 120 relative to the center of that image.

As mentioned above in respect of FIG. 3, the SAR image 320 and the first reference image 318 are in at least some example embodiments larger than the actual images used to train the classifier 326. More particularly, block 322 of FIG. 3, which selects the tile pairs 324 a-n from the normalized first reference image 318 and SAR image 320 for entry into the classifier 326, applies certain criteria to determine how to select tiles from the larger images 318,320.

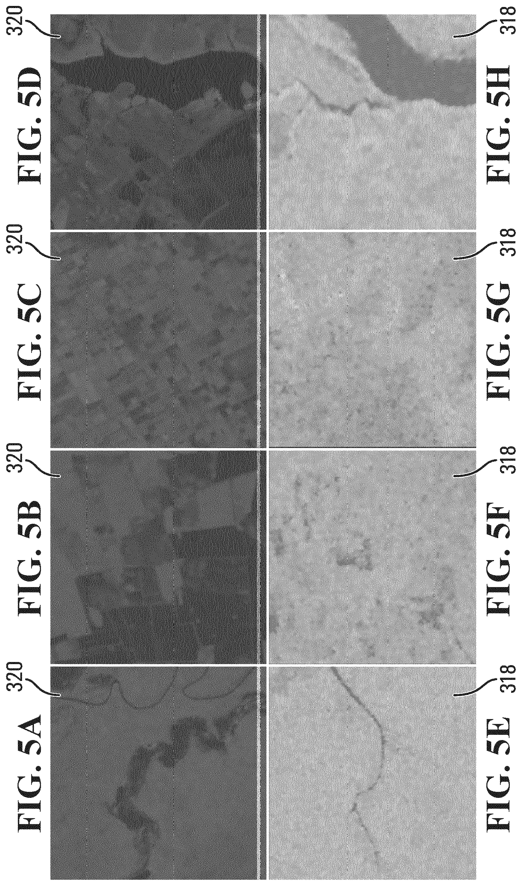

One example criterion is coefficient of variation. In other words, it is desirable to select tiles with high contrast across the tile. FIGS. 5A-5D depict tiles in the form of example SAR images 320 with high coefficients of variation, while FIGS. 5E-5H depict tiles in the form of example first reference images 318 selected from the Sentinel-1 dataset with high coefficients of variation. As an example of applying the coefficient of variation criterion, tiles comprising entirely a body of water (e.g., an ocean or a lake) are not selected.

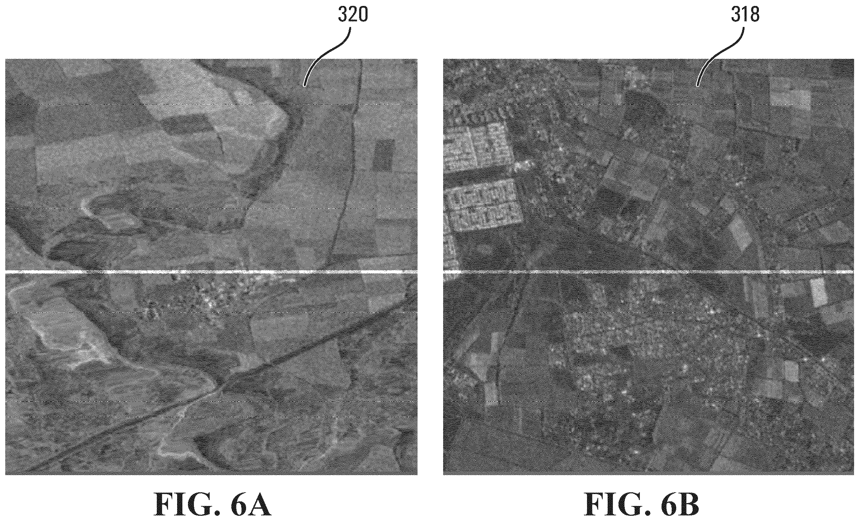

Another example criterion is number of edges. In other words, it is desirable to select tiles with a high number of edges. FIG. 6A depicts a tile in the form of an example SAR image 320 with a high number of edges, while FIG. 6B depicts a tile in the form of an example first reference image 318 selected from the Sentinel-1 dataset with a high number of edges.

Another example criterion is elevation. In other words, it is desirable to select tiles where at least a minimum proportion of the image is less than an upper elevation threshold.

The above criteria are applied and explained in more detail below in the context of tile selection performed on the basis of training images corresponding to the histograms 400a-c of FIGS. 4A-4C. The training images comprise a first ground range detected ("GRD") in the form of the SAR image 320, from which a SAR tile is selected; and a second GRD image in the form of the first reference image 318 from which a first reference tile is selected. It is these tiles that are then used to train the convolutional neural network so that it can act as the classifier 326. As described further below, DEM tiles are also selected from the DEM image 310 and used for tile selection. As described below, selecting a tile from the SAR image 320 results in the corresponding tiles from the first reference and DEM images 318,310 also being selected.

## Example Tile Selection

Tile selection comprises two stages: tile thresholding and tile ranking. In the tile thresholding stage, potential tiles are selected from the larger SAR, first reference, and DEM images 320,318,310 for ranking; these tiles are respectively referred to as the SAR tile, first reference tile, and DEM tile below. In the tile ranking stage, the potential tiles are ranked and only those potential tiles that are ranked sufficiently highly are used for training purposes. As with FIG. 3, the operations described in respect of tile thresholding and tile ranking may be performed by the computer system 200.

During tile thresholding, the system 200 applies the coefficient of variation and elevation criteria such that tiles that satisfy the following criteria are selected for ranking:

1. The SAR tile comprises less than a background area limit of background area. Background area represents areas of the SAR image 320 that are dark pixels (i.e., pixels whose value from e.g. 0-255 is less than a suitable threshold) that consequently represent little or no information. The background area limit may be approximately 10% of the SAR tile's area, for example.

2. The DEM tile comprises no more than a first elevation limit representing portions of the DEM tile greater than an upper elevation threshold. The first elevation limit may be approximately 5% of the DEM tile, and the upper elevation threshold may be approximately 20 meters more than an average scene height of the DEM image from which the DEM tile is selected.

3. The DEM tile comprises at most a second elevation limit representing portions of the DEM tile less than a lower elevation threshold. The second elevation limit may be approximately 80% of the DEM tile, and the lower elevation threshold may be approximately 30 meters less than the average scene height of the DEM image.

SAR tiles (and corresponding first reference tiles) that satisfy the above criteria are then ranked.

During tile ranking, the system 200 scores and then ranks tiles to determine which of the tiles to input to the convolutional neural network to train it to act as the classifier 326. For the purpose of ranking, each of the tiles is given an index to distinguish it from other tiles. A SAR tile, first reference tile, and DEM tile that share an index are of corresponding areas of the SAR image, first reference image, and DEM image 320,318,310, respectively, following grid normalization of the images 320,318,310 from which the tiles are selected.

A tile score is determined for the tiles of each tile index that passes tile thresholding, as follows:

1. A first score term is determined. The first score term is determined from a backscatter value of the first reference tile. A first weight is assigned to the first score term when the backscatter value for a percentage of the first reference image is within a backscatter range, and a second weight otherwise assigned to the first score term. The first weight is higher than the second weight. The first weight may be approximately 99, the backscatter range may be less than approximately 5 dB, and the percentage of the first reference image may be between approximately 20% and approximately 80%.

2. A tile index weight is determined. The tile index weight is assigned either a first value or a second value, with the second value being higher than the first value. The tile index weight is assigned the first value if:

(a) a mean value of the first reference tile is less than a mean value of the first reference image 318 from which the first reference tile is selected (i.e., second GRD image); or

(b) a mean value of the SAR tile is less than a mean value of the SAR image 320 from which the SAR tile is selected (i.e., first GRD image).

The first value may be approximately 0, and the second value may be approximately 1.

3. A coefficient of variation is determined for the SAR tile. The coefficient of variation for the SAR tile may be determined as the standard deviation of the SAR tile divided by the mean of the SAR tile.

4. A coefficient of variation is determined for the first reference tile. The coefficient of variation for the first reference tile may be determined as the standard deviation of the first reference tile divided by the mean of the first reference tile.

5. The tile score is determined. The overall tile score for a given tile index may be determined by adding the first score term to a sum of the coefficient of variation for the SAR tile and the coefficient of variation for the first reference tile, in which that sum is weighed by the tile index weight. This is expressed formulaically in Equation (1) below:

$$tile\_score := first\_score\_term + tile\_weight * (SAR\_cv + first\_reference\_cv) \qquad (1)$$

where tile_score is the tile score, first_score_term is the first score term, tile_weight is the tile index weight, SAR_cv is the coefficient of variation for the SAR tile, and first_reference_cv is the coefficient of variation for the first reference tile.

Once tile scores are determined for all indices corresponding to tiles selected from the larger SAR, first reference, and DEM images 320,318,310, the scores are compared to each other and those tiles having scores above a minimum score percentile are used for training. The minimum score percentile may be approximately the 60th percentile.

In at least some embodiments, training may also comprise applying transfer learning in which pre-trained weights are used as a starting point for training the convolutional neural network to be trained as the classifier 326. Pre-trained weighted may be acquired from ImageNet™ image library, for example. For example, when using the PyTorch™ framework to implement the convolutional neural network, transfer learning may be implemented using the following computer code during training:

$$\text{data\_transform} := \text{transforms.Compose(transforms.Normalize([a,b,c],[d,e,f])},$$

where a-f are parameters that vary with the particular embodiment.

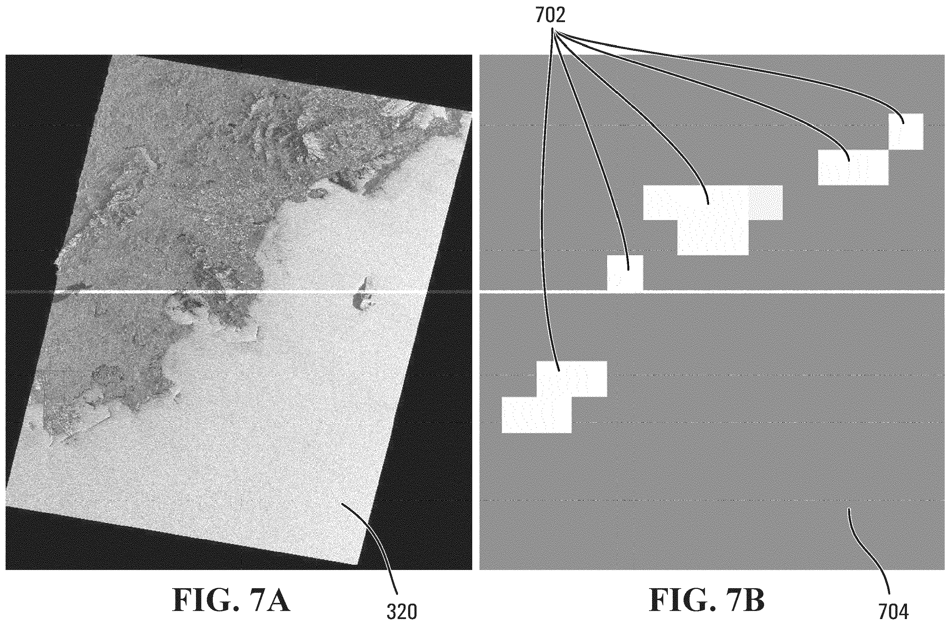

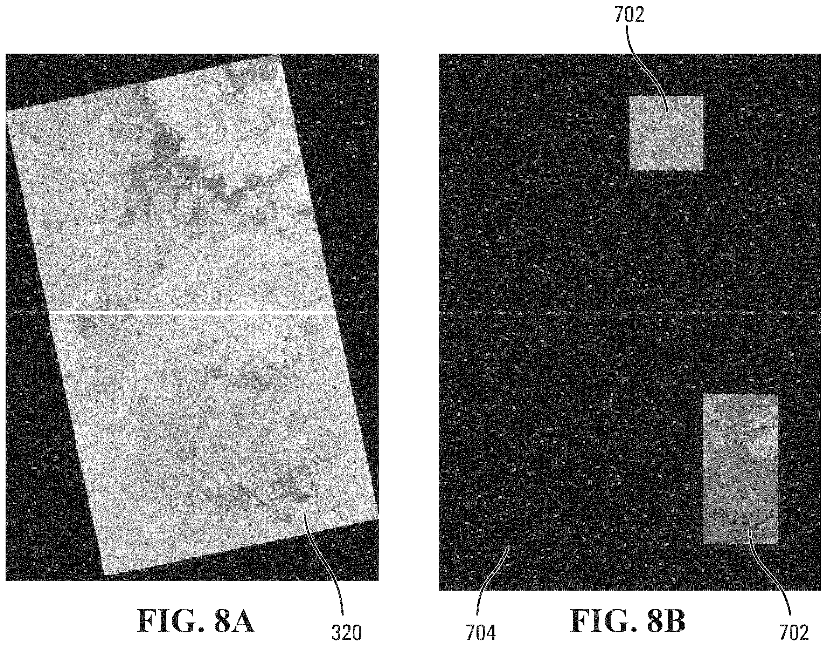

The results of tile selection are seen in FIGS. 7A, 7B, 8A, and 8B. For example, FIG. 7A shows an example SAR image 320 on which tile selection (i.e., tile thresholding and ranking) is performed as described above. FIG. 7B shows the output of the tile selection. Namely, selected tiles 702 are shown in white, and unselected tiles 704 are shown in dark shades of grey.

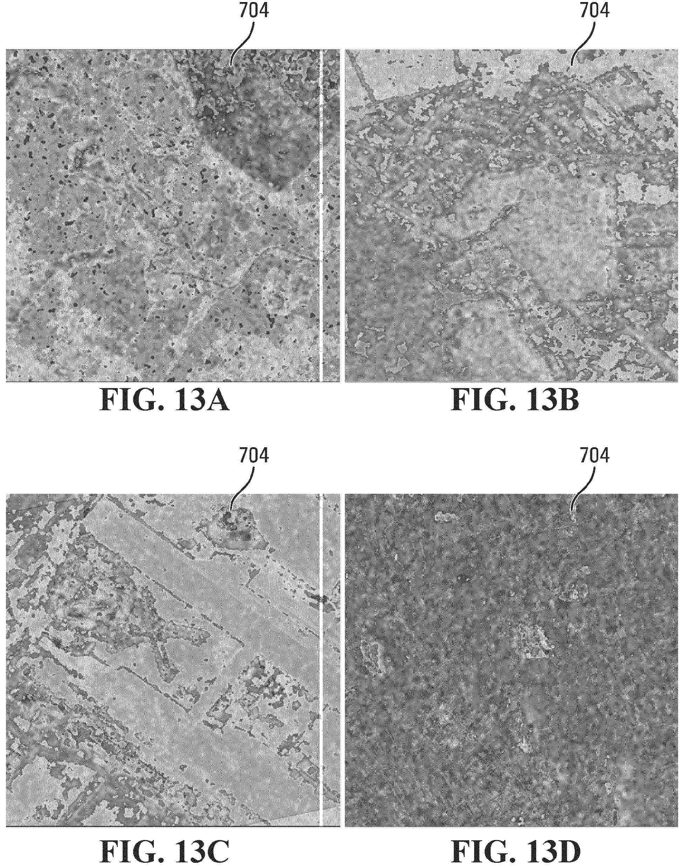

Similarly, FIG. 8A shows an example SAR image 320 on which tile selection (i.e., tile thresholding and ranking) is performed as described above, and FIG. 7B shows the output of the tile selection in the form of selected tiles 702 and unselected tiles 704. In contrast to FIG. 7B, the selected tiles 704 of FIG. 8B are a greyscale version of the original, which is in RGB composite false color as a result of applying transfer learning. FIGS. 13A-13D show additional examples of selected tiles 704 that are also greyscale versions of the original, which are similarly in RGB composite false color as a result of applying transfer learning.

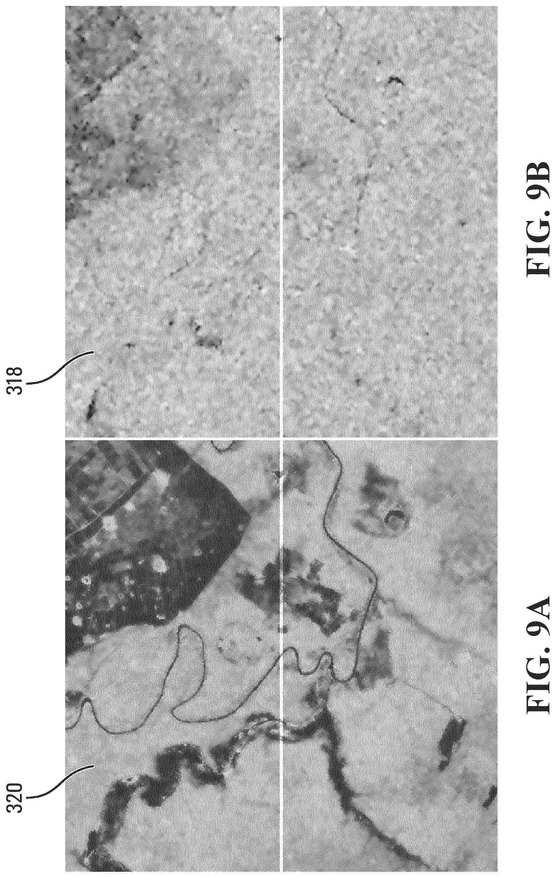

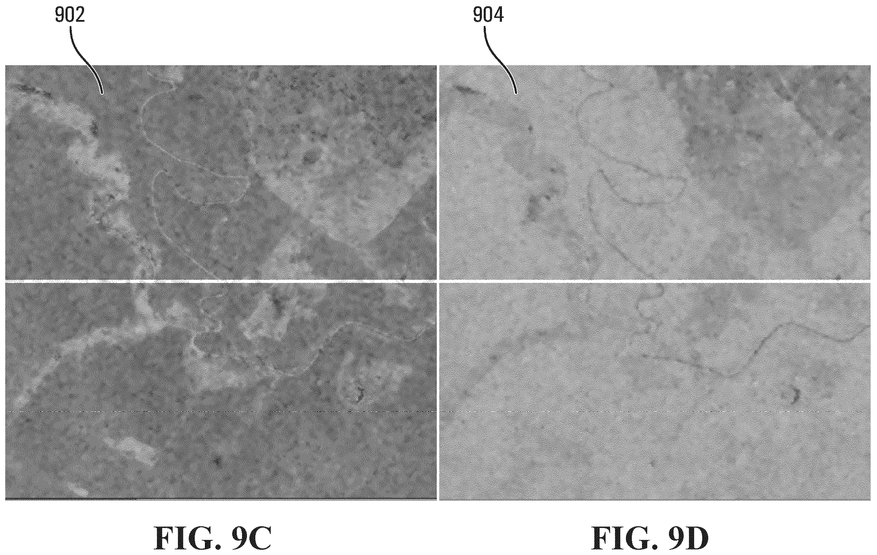

FIGS. 9A-9D depict an example SAR image 320 (FIG. 9A), first reference image 318 (FIG. 9B), difference image 902 (FIG. 9C), and 3-band image 904 (FIG. 9D) used during training of a convolutional neural network to perform geolocation error detection. The difference image 902 represents the pixel-level difference between the SAR image 320 and first reference image 318, and the 3-band image 904 represents a combination of the SAR image 320, first reference image 318, and difference image 902. The 3-band image 904 may be used for training an artificial neural network, such as a convolutional neural network, to behave as the classifier 326 in at least some example embodiments. Analogously, in at least some other embodiments, the 3-band image 904 may be presented as three separate images that are respectively input into three different artificial neural networks. While FIG. 3 shows an embodiment in which the first reference image 318 and the SAR image 320 are input into block 322 for tiling, in embodiments in which training (or inference) is performed on one or more additional images (such as when the difference image 902 is also input to the classifier 326), those one or more additional images may analogously be input to block 322 and consequently tiled and input to the classifier 326.

The images comprising the 3-band image 904 may be presented to the classifier 326 during training in any order, with the corresponding order being used during testing/inference. While the 3-band image 904 described above comprises the SAR image 320, first reference image 318, and difference image 902, other images may be used in the 3-band image 904 or, more generally, in a multi-band image used for training and testing/inference. For example, in at least some embodiments DEM images and land sea masks may be used.

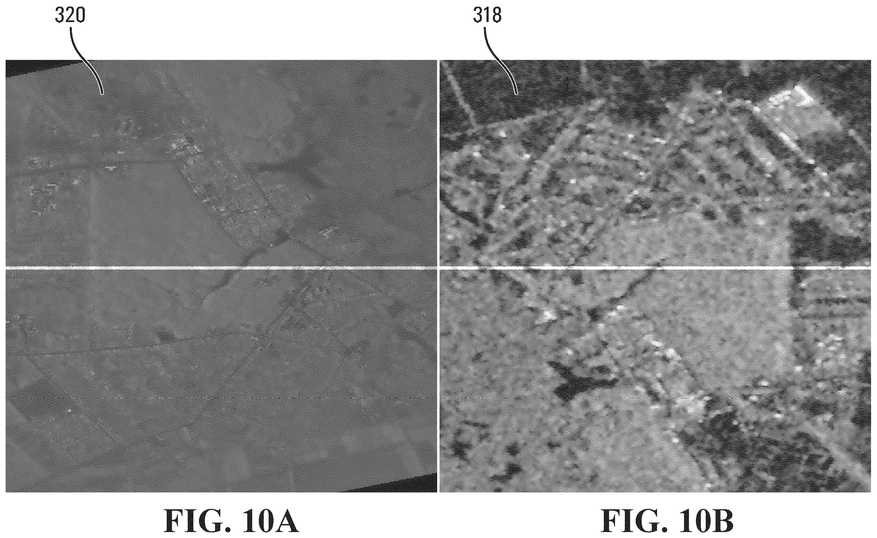

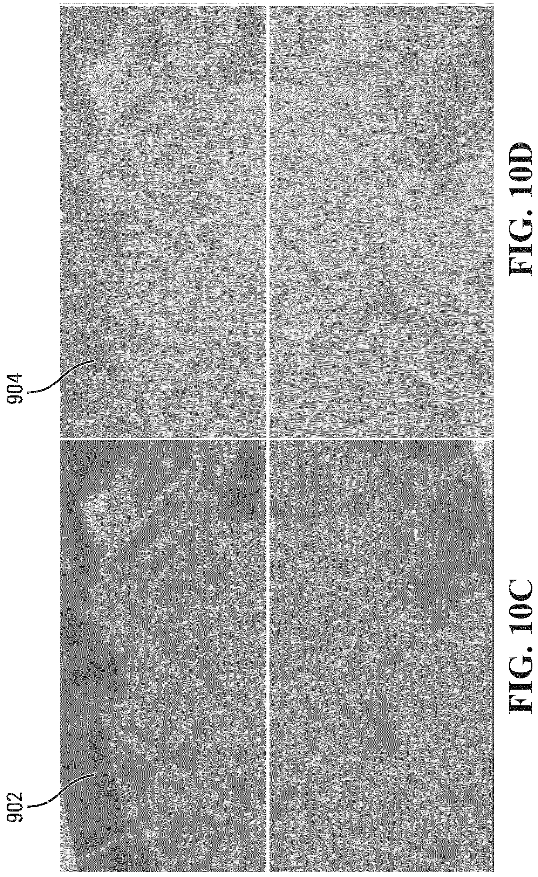

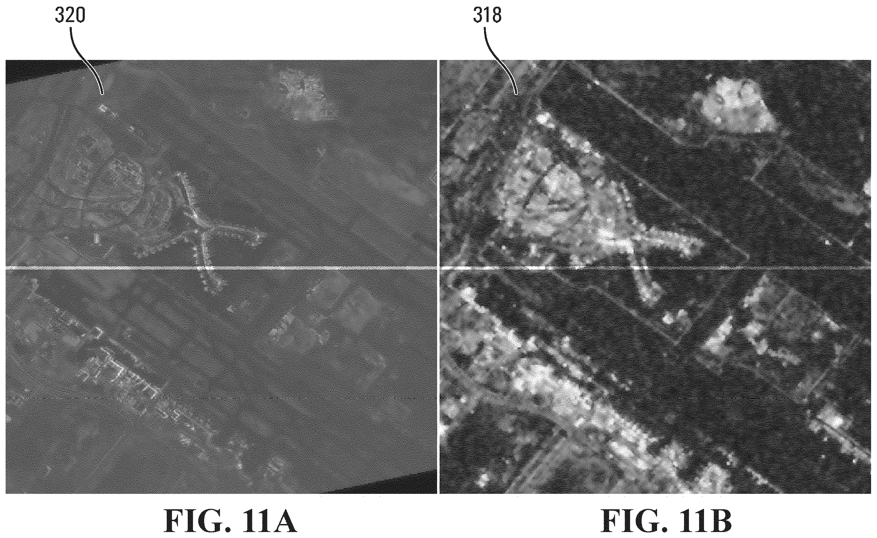

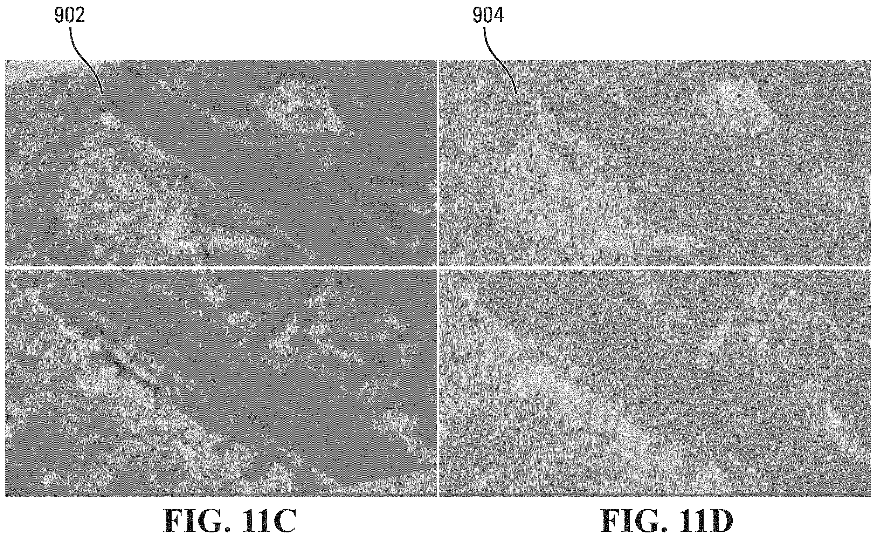

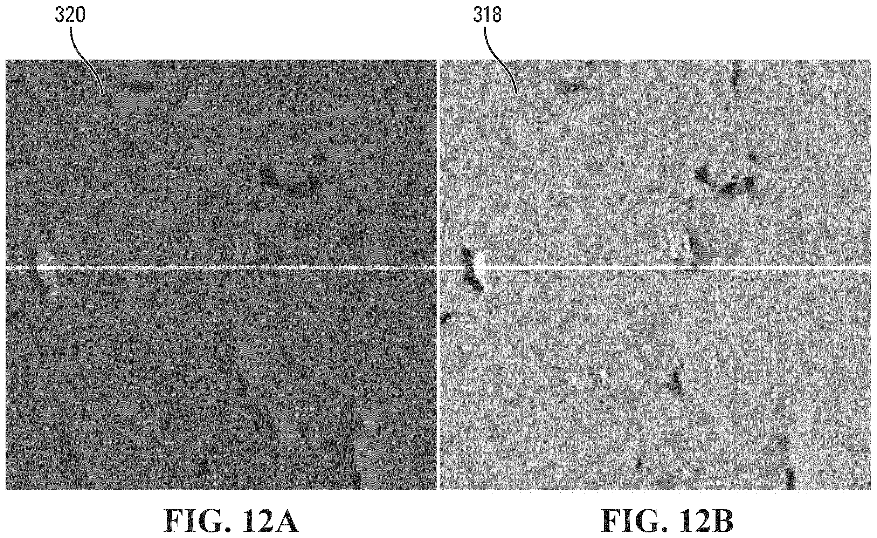

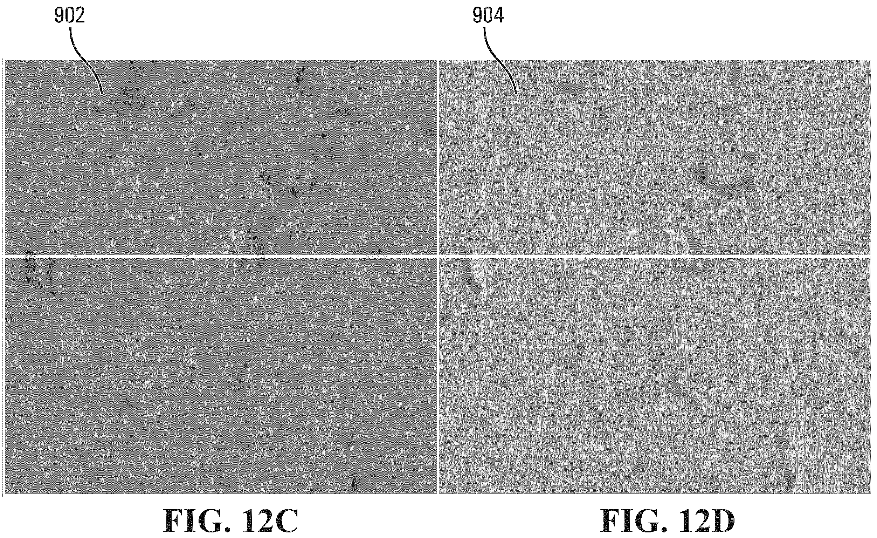

Each of FIGS. 10A-10D, 11A-11D, and 12A-12D is analogous to FIGS. 9A-9D. Namely, each depicts an example SAR image 380 (FIGS. 10A, 11A, and 12A), the first reference image 318 corresponding to that SAR image 380 (FIGS. 10B, 11B, and 12B), the difference image 902 representing the difference between the SAR image 902 and the first reference image 318 (FIGS. 10C, 11C, and 12C), and the 3-band image 904 representing the combination of that SAR image 380, first reference image 318, and difference image 902 (FIGS. 10D, 11D, and 12D).

Testing/Inference

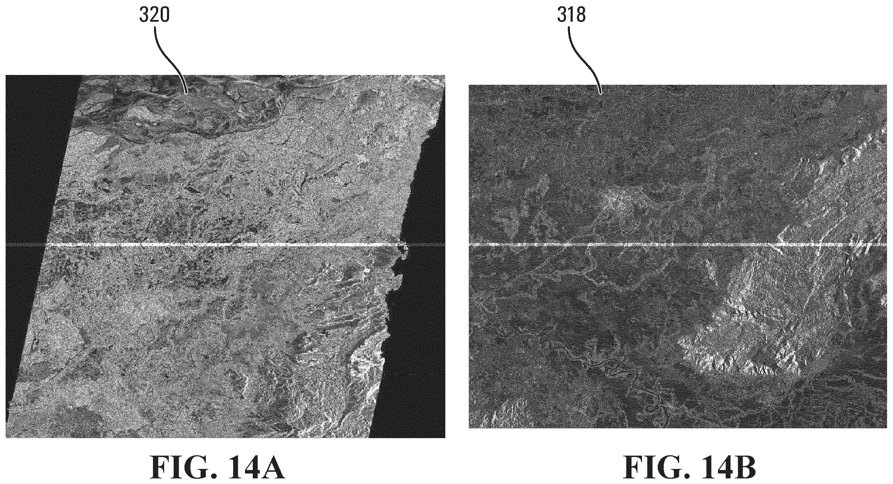

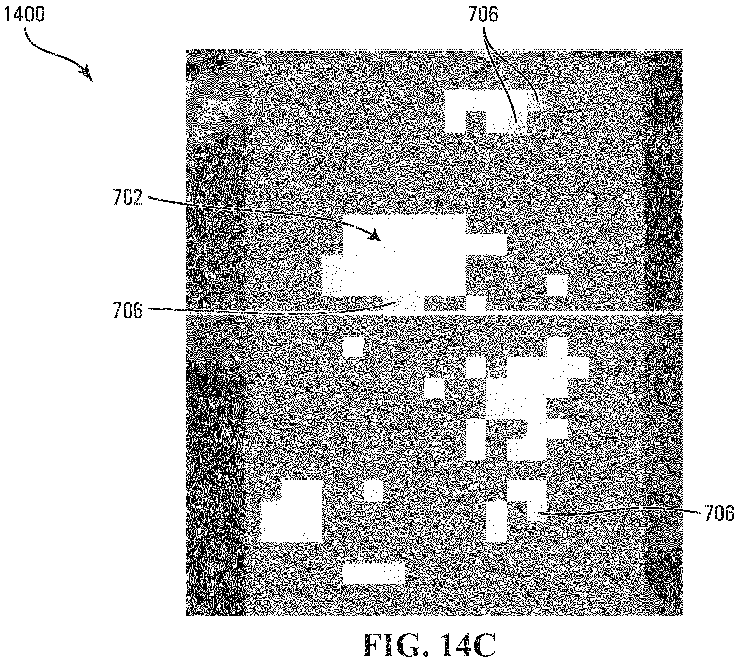

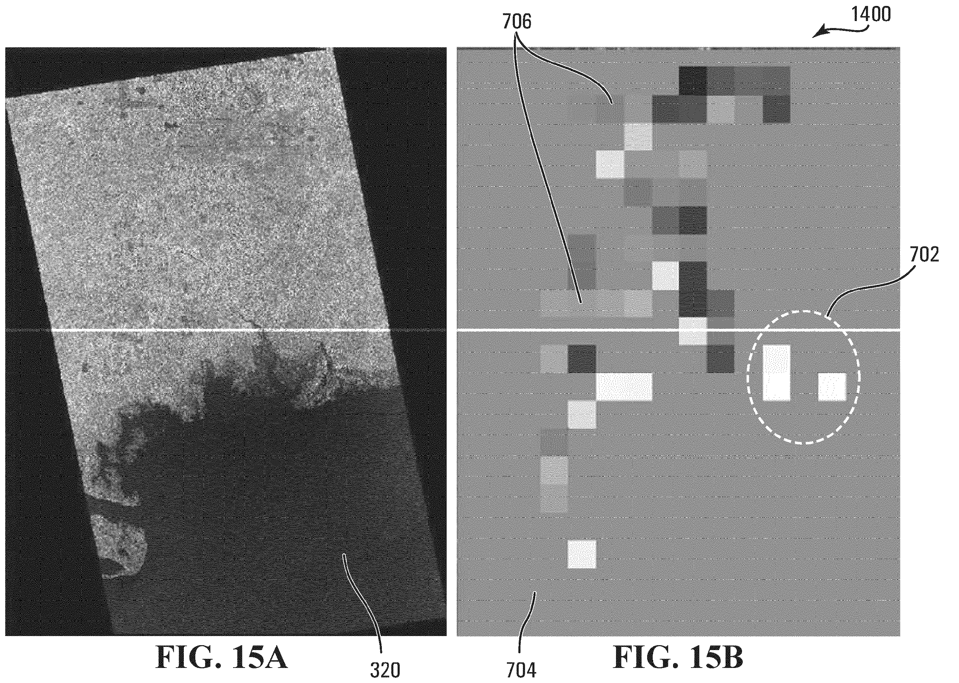

Once trained, the classifier 326 may be used for geolocation error detection in accordance with the system 300 of FIG. 3. FIGS. 14A and 14B, for example, respectively show a SAR image 320 and a corresponding reference image 318, both of which are test images in this example, from which tiles are selected and input to the classifier 326. More particularly, the SAR image 320, reference image 318, and corresponding difference image 902 and 3-band image 904 are used for inference in a manner analogous to that described in respect FIGS. 9A-9D, 10A-10D, 11A-11D, and 12A-12D for training. The output of the classifier 326 before voting is a heat map 1400 shown in FIG. 14C overlaid on the SAR image 320. The tile selection method described above can be applied during testing/inference as well to determine which specific tiles selected from the SAR image 320 are classified. This is done in respect of FIG. 14C, with the heat map 1400 accordingly showing selected tiles 702 and unselected tiles 704. The unselected tiles 704 have unknown geolocation errors, while the unselected tiles are shaded accordingly to the degree of geolocation error. A subset 706 of the selected tiles 702 depict the shading used to show selected tiles 702 of varying geolocation error as described in more detail in respect of FIG. 15B below.

Similarly, FIGS. 15A and 15B respectively show a SAR image 320, which acts as a test image and from which tiles are selected and input to the classifier 326, and the resultant heat map 1400. As with the heat map 1400 from FIG. 14C, the heat map 1400 of FIG. 15B also shows selected tiles 702 and unselected tiles 704, as well as a subset 706 of the selected tiles 702 shown in greyscale to show different degrees of geolocation error. Namely, the subset 706 of the selected tiles 702 are shown in black, white, and shades of grey between white and black, and unselected tiles 704 are shown in solid dark grey. Different shades of grey comprising the subset 706 represent different rankings of the selected tiles 704 (e.g., black tiles are lowest ranked, white are ranked highest, and the greyscale tiles 704 between black and white are ranked between those extremes).

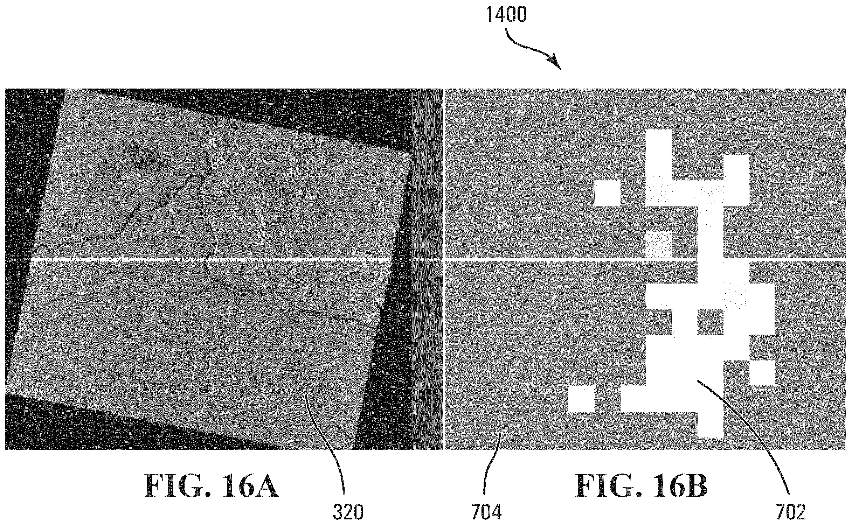

FIGS. 16A and 16B also respectively show a SAR image 320, which acts as a test image and from which tiles are selected and input to the classifier 326, and the resultant heat map 1400. The heat map 1400 of FIG. 16B shows selected 702 and unselected tiles 704, with the selected tiles 702 corresponding to a threshold amount of geolocation error.

The embodiments have been described above with reference to flow, sequence, and block diagrams of methods, apparatuses, systems, and computer program products. In this regard, the depicted flow, sequence, and block diagrams illustrate the architecture, functionality, and operation of implementations of various embodiments. For instance, each block of the flow and block diagrams and operation in the sequence diagrams may represent a module, segment, or portion of code, which comprises one or more executable instructions for implementing the specified action(s). In some alternative embodiments, the action(s) noted in that block or operation may occur out of the order noted in those figures. For example, two blocks or operations shown in succession may, in some embodiments, be executed substantially concurrently, or the blocks or operations may sometimes be executed in the reverse order, depending upon the functionality involved. Some specific examples of the foregoing have been noted above but those noted examples are not necessarily the only examples. Each block of the flow and block diagrams and operation of the sequence diagrams, and combinations of those blocks and operations, may be implemented by special purpose hardware-based systems that perform the specified functions or acts, or combinations of special purpose hardware and computer instructions.

The terminology used herein is for the purpose of describing particular embodiments only and is not intended to be limiting. Accordingly, as used herein, the singular forms "a", "an", and "the" are intended to include the plural forms as well, unless the context clearly indicates otherwise (e.g., a reference in the claims to "a challenge" or "the challenge" does not exclude embodiments in which multiple challenges are used). It will be further understood that the terms "comprises" and "comprising", when used in this specification, specify the presence of one or more stated features, integers, steps, operations, elements, and components, but do not preclude the presence or addition of one or more other features, integers, steps, operations, elements, components, and groups. Directional terms such as "top", "bottom", "upwards", "downwards", "vertically", and "laterally" are used in the following description for the purpose of providing relative reference only, and are not intended to suggest any limitations on how any article is to be positioned during use, or to be mounted in an assembly or relative to an environment. Additionally, the term "connect" and variants of it such as "connected", "connects", and "connecting" as used in this description are intended to include indirect and direct connections unless otherwise indicated. For example, if a first device is connected to a second device, that coupling may be through a direct connection or through an indirect connection via other devices and connections. Similarly, if the first device is communicatively connected to the second device, communication may be through a direct connection or through an indirect connection via other devices and connections. The term "and/or" as used herein in conjunction with a list means any one or more items from that list. For example, "A, B, and/or C" means "any one or more of A, B, and C".

It is contemplated that any part of any aspect or embodiment discussed in this specification can be implemented or combined with any part of any other aspect or embodiment discussed in this specification.

The scope of the claims should not be limited by the embodiments set forth in the above examples, but should be given the broadest interpretation consistent with the description as a whole.

It should be recognized that features and aspects of the various examples provided above can be combined into further examples that also fall within the scope of the present disclosure. In addition, the figures are not to scale and may have size and shape exaggerated for illustrative purposes.

## Claims

1.   A method for detecting geolocation error in a synthetic aperture radar (SAR) image (302, 314, 320), the method comprising:

(a) obtaining the SAR image (302, 314, 320) purportedly depicting a geographical area;
(b) obtaining at least one reference image (306, 318) of the geographical area, wherein the at least one reference image (306, 318) comprises a first reference image (306, 318);
(c) inputting data based on the SAR image (302, 314, 320) and the at least one reference image (306, 318) into an artificial neural network trained as a classifier (326) to determine that the SAR image (302, 314, 320) and the reference image (306, 318) are of different areas, wherein the inputting comprises:

(i) generating a difference image (902) representing a difference between the SAR image (302, 314, 320) and the first reference image (306, 318); and
(ii) inputting the difference image (902) into the artificial neural network; and

(d) detecting the geolocation error as a result of the artificial neural network determining that the SAR image (302, 314, 320) and the at least one reference image (306, 318) are of different areas.

2. The method of claim 1, wherein the inputting further comprises inputting the SAR image (302, 314, 320) and the at least one reference image (306, 318) into the artificial neural network, wherein the at least one reference image (306, 318) comprises the first reference image (306, 318) and a second reference image, wherein the second reference image comprises the difference image (902) representing the difference between the SAR image (302, 314, 320) and the first reference image (306, 318).

3. The method of claim 2, further comprising:

(e) generating a three-band, false color composite image (904) from the SAR image (302, 314, 320) and the first (306, 318) and second reference images; and
(f) inputting the SAR image (302, 314, 320) and the at least one reference image (306, 318) into the artificial neural network by inputting the false color composite image (904) into the artificial neural network.

4. The method of any one of claims 1 to 3, wherein the artificial neural network comprises a convolutional neural network.

5. The method of any one of claims 1 to 4, wherein obtaining the SAR image (302, 314, 320) and the at least one reference image (306, 318) comprises respectively selecting the SAR image (302, 314, 320) as a SAR tile (324 a-n) and the at least one reference image (306, 318) as at least one reference tile (324 a-n) from one or more larger images (320).

6. The method of claim 5, wherein the one or more larger images (320) comprise a first ground range detected image from which the SAR tile (324 a-n) is selected and a second ground range detected image from which a first reference tile (324 a-n) of the at least one reference tile (324 a-n) is selected.

7. The method of claim 6, wherein:

(g) the SAR tile (324 a-n) comprises less than a background area limit of background area;
(h) a digital elevation model (DEM) tile (324 a-n), selected from a larger DEM image (310) and corresponding in location to the SAR tile (324 a-n) and first reference tile (324 a-n), comprises no more than a first elevation limit representing portions of the DEM tile (324 a-n) greater than an upper elevation threshold; and
(i) the DEM tile (324 a-n) comprises at most a second elevation limit representing portions of the DEM tile (324 a-n) lower than a lower elevation threshold.

8. The method of claim 6, wherein the SAR tile (324 a-n), the first reference tile (324 a-n), and the DEM tile (324 a-n) respectively share a tile index indexing a location of the SAR tile (324 a-n), the first reference tile (324 a-n), and the DEM tile (324 a-n), and further comprising:

(j) determining a tile score for the tile index, comprising:

(i) determining a first score term from a backscatter value of the first reference tile (324 a-n), wherein a first weight is assigned to the first score term when the backscatter value for a percentage of the first reference tile (324 a-n) is within a backscatter range and a second weight is otherwise assigned to the first score term, wherein the first weight is higher than the second weight;
(ii) determining a tile index weight, wherein a first value is assigned to the tile index weight if either:

(A) a mean value of the first reference tile (324 a-n) is less than a mean value of the second ground range detected image;
(B) a mean value of the SAR tile (324 a-n) is less than a mean value of the first ground range detected image,

and wherein a second value is otherwise assigned to the tile index weight, wherein the second value is higher than the first value;

(iii) determining a coefficient of variation for the SAR tile (324 a-n);

(iv) determining a coefficient of variation for the first reference tile (324 a-n); and

(v) determining the tile score for the tile index as the first score term added to a sum of the coefficient variation for the SAR tile (324 a-n) and the coefficient of variation for the first reference tile, wherein the sum is weighted by the tile index weight;

(k) comparing the tile score against tile scores for other respective tile indices of tiles (324 an) selected from the first ground range detected image, the second ground range detected image, and the DEM image (310); and

(l) determining that the tile score for the tile index is above a minimum score percentile for all of the tile scores,

9. The method of claim 8, wherein the minimum score percentile is approximately the 60th percentile, the first weight is approximately 99, the backscatter range is less than approximately 5 dB, the percentage of the first reference tile is between approximately 20% and approximately 80%, the second weight is approximately 1, the first value is approximately 0, and the second value is approximately 1.

10. The method of any one of claims 5 to 9, further comprising generating and displaying a heat map, wherein the heat map comprises a color corresponding to the geolocation error of the SAR tile (324 a-n) overlaid on the larger image (320) from which the SAR tile (324 a-n) is selected.

11. The method of any one of claims 1 to 9, wherein the SAR image (302, 314, 320) comprises an X-band SAR image (302, 314, 320) and the at least one reference image (306, 318) comprises a C-band SAR image (302, 314, 320).

12. A system for detecting geolocation error in a synthetic aperture radar (SAR) image (302, 314, 320), the system comprising:

(m) a database storing the SAR image (302, 314, 320) and at least one reference image (306, 318); and

(n) a processor communicative with the database and configured to perform the method of any one of claims 1 to 11.

13. A non-transitory computer readable medium having stored thereon computer program code that is executable by a processor and that, when executed by the processor, causes the processor to perform the method of any one of claims 1 to 11.

**Patentansprüche**

1. Verfahren zum Erfassen eines Geolokalisierungsfehlers in einem Synthetic-Aperture-Radar-Bild (SAR-Bild) (302, 314, 320), wobei das Verfahren umfasst:

(a) Erhalten des SAR-Bildes (302, 314, 320), das angeblich ein geografisches Gebiet abbildet;

(b) Erhalten mindestens eines Referenzbildes (306, 318) des geografischen Gebiets, wobei das mindestens eine Referenzbild (306, 318) ein erstes Referenzbild (306, 318) umfasst;

(c) Eingeben von Daten basierend auf dem SAR-Bild (302, 314, 320) und dem mindestens einen Referenzbild (306, 318) in ein als Klassifikator (326) trainiertes künstliches neuronales Netz, um zu bestimmen, dass das SAR-Bild (302, 314, 320) und das Referenzbild (306, 318) von unterschiedlichen Gebieten stammen, wobei das Eingeben umfasst:

(i) Erzeugen eines Differenzbildes (902), das eine Differenz zwischen dem SAR-Bild (302, 314, 320) und dem ersten Referenzbild (306, 318) darstellt; und

(ii) Eingeben des Differenzbildes (902) in das künstliche neuronale Netz; und

(d) Erfassen des Geolokalisierungsfehlers als ein Ergebnis des Bestimmens durch das künstliche neuronale Netz, dass das SAR-Bild (302, 314, 320) und das mindestens eine Referenzbild (306, 318) von unterschiedlichen Gebieten stammen.

2. Verfahren nach Anspruch 1, wobei das Eingeben weiter das Eingeben des SAR-Bildes (302, 314, 320) und des mindestens einen Referenzbildes (306, 318) in das künstliche neuronale Netz umfasst, wobei das mindestens eine Referenzbild (306, 318) das erste Referenzbild (306, 318) und ein zweites Referenzbild umfasst, wobei das zweite Referenzbild das Differenzbild (902) umfasst, das die Differenz zwischen dem SAR-Bild (302, 314, 320) und dem ersten Referenzbild (306, 318) darstellt.

3. Verfahren nach Anspruch 2, weiter umfassend:

(e) Erzeugen eines dreibandigen Falschfarben-Kompositbildes (904) aus dem SAR-Bild (302, 314, 320) und dem ersten (306, 318) und zweiten Referenzbild; und
(f) Eingeben des SAR-Bildes (302, 314, 320) und des mindestens einen Referenzbildes (306, 318) in das künstliche neuronale Netz durch Eingeben des Falschfarben-Kompositbildes (904) in das künstliche neuronale Netz.

4. Verfahren nach Anspruch 1 bis 3, wobei das neuronale Netz ein neuronales Faltungsnetz umfasst.

5. Verfahren nach einem der Ansprüche 1 bis 4, wobei das Erhalten des SAR-Bildes (302, 314, 320) und des mindestens einen Referenzbildes (306, 318) das Auswählen des SAR-Bildes (302, 314, 320) als eine SAR-Kachel (324 a-n) und des mindestens einen Referenzbildes (306, 318) als mindestens eine Referenzkachel (324 a-n) aus einem oder mehreren größeren Bildern (320) umfasst.

6. Verfahren nach Anspruch 5, wobei das eine oder die mehreren größeren Bilder (320) ein erstes Horizontalentfernungsbild umfassen, aus dem die SAR-Kachel (324 a-n) ausgewählt wird, und ein zweites Horizontalentfernungsbild, aus dem eine erste Referenzkachel (324 a-n) der mindestens einen Referenzkachel (324 a-n) ausgewählt wird.

7. Verfahren nach Anspruch 6, wobei:

(g) die SAR-Kachel (324 a-n) weniger als eine Hintergrundgebietsgrenze des Hintergrundgebiets umfasst;
(h) eine Kachel (324 a-n) eines digitalen Höhenmodells (DEM), die aus einem größeren DEM-Bild (310) ausgewählt wurde und ortsmäßig der SAR-Kachel (324 a-n) und der ersten Referenzkachel (324 a-n) entspricht, nicht mehr als eine erste Höhengrenze umfasst, die Teile der DEM-Kachel (324 a-n) darstellt, die größer als ein oberer Höhenschwellenwert sind; und
(i) die DEM-Kachel (324 a-n) höchstens eine zweite Höhengrenze, die Teile der DEM-Kachel (324 a-n) darstellt, die niedriger als ein niedriger Höhenschwellenwert sind, umfasst.

8. Verfahren nach Anspruch 6, wobei die SAR-Kachel (324 a-n), die erste Referenzkachel (324 a-n) und die DEM-Kachel (324 a-n) jeweils einen Kachelindex gemeinsam haben, der einen Standort der SAR-Kachel (324 a-n), der ersten Referenzkachel (324 a-n) und der DEM-Kachel (324 a-n) indexiert, und weiter umfasst:

(j) Bestimmen einer Kachelpunktzahl für den Kachelindex, umfassend:

(i) Bestimmen eines ersten Punktzahlwerts aus einem Rückstreuwert der ersten Referenzkachel (324 a-n), wobei dem ersten Punktzahlwert ein erstes Gewicht zugewiesen wird, wenn der Rückstreuwert für einen Prozentsatz der ersten Referenzkachel (324 a-n) innerhalb eines Rückstreubereichs liegt, und dem ersten Punktzahlwert andernfalls ein zweites Gewicht zugewiesen wird, wobei das erste Gewicht höher ist als das zweite Gewicht;
(ii) Bestimmen eines Kachelindexgewichts, wobei dem Kachelindexgewicht ein erster Wert zugewiesen wird, wenn entweder:

(A) ein Mittelwert der ersten Referenzkachel (324 a-n) kleiner ist als ein Mittelwert des zweiten erfassten Horizontalentfernungsbildes;
(B) ein Mittelwert der SAR-Kachel (324 a-n) kleiner ist als ein Mittelwert des ersten Horizontalentfernungsbildes,

und wobei dem Kachelindexgewicht andernfalls ein zweiter Wert zugewiesen wird, wobei der zweite Wert höher ist als der erste Wert;
(iii) Bestimmen eines Variationskoeffizienten für die SAR-Kachel (324 a-n);
(iv) Bestimmen eines Variationskoeffizienten für die erste Referenzkachel (324 a-n); und
(v) Bestimmen der Kachelpunktzahl für den Kachelindex als erster Punktzahlwert, der zu einer Summe der Koeffizientenvariation für die SAR-Kachel (324 an) und des Variationskoeffizienten für die erste Referenzkachel addiert wird, wobei die Summe mit dem Kachelindexgewicht gewichtet wird;

(k) Vergleichen der Kachelpunktzahl mit Kachelpunktzahlen für andere jeweilige Kachelindizes von Kacheln (324 a-n), die aus dem ersten erfassten Horizontalentfernungsbild, dem zweiten erfassten Horizontalentfernungsbild und dem DEM-Bild (310) ausgewählt werden; und

(l) Bestimmen, dass die Kachelpunktzahl für den Kachelindex über einem Mindestpunktzahlperzentil für alle Kachelpunktzahlen liegt.

9. Verfahren nach Anspruch 8, wobei das Mindestpunktzahlperzentil etwa das 60-te Perzentil ist, das erste Gewicht etwa 99 beträgt, der Rückstreubereich weniger als etwa 5 dB beträgt, der Prozentsatz der ersten Referenzkachel zwischen etwa 20 % und etwa 80 % liegt, das zweite Gewicht ungefähr 1 beträgt, der erste Wert ungefähr 0 beträgt und der zweite Wert ungefähr 1 beträgt.

10. Verfahren nach einem der Ansprüche 5 bis 9, das weiter das Erzeugen und Anzeigen einer Heatmap umfasst, wobei die Heatmap eine Farbe umfasst, die dem Geolokalisierungsfehler der SAR-Kachel (324 a-n) entspricht, die über das größere Bild (320) gelegt ist, aus dem die SAR-Kachel (324 a-n) ausgewählt wird.

11. Verfahren nach einem der Ansprüche 1 bis 9, wobei das SAR-Bild (302, 314, 320) ein X-Band-SAR-Bild (302, 314, 320) umfasst und das mindestens eine Referenzbild (306, 318) ein C-Band-SAR-Bild (302, 314, 320) umfasst.

12. System zum Erfassen eines Geolokalisierungsfehlers in einem Synthetic-Aperture-Radar-Bild (SAR-Bild) (302, 314, 320), wobei das System umfasst:

(m) eine Datenbank, in der das SAR-Bild (302, 314, 320) und mindestens ein Referenzbild (306, 318) gespeichert sind; und
einen Prozessor, der mit der Datenbank in Kommunikation steht und dazu konfiguriert ist, das Verfahren nach einem der Ansprüche 1 bis 11 durchzuführen.

13. Nichtflüchtiges, computerlesbares Medium, auf dem Computerprogrammcode gespeichert ist, der von dem Prozessor ausführbar ist und der, wenn er von dem Prozessor ausgeführt wird, den Prozessor veranlasst, das Verfahren nach einem der Ansprüche 1 bis 11 durchzuführen.

## Revendications

1. Procédé de détection d'erreur de géolocalisation dans une image radar à synthèse d'ouverture (SAR) (302, 314, 320), le procédé comprenant :

(a) l'obtention de l'image SAR (302, 314, 320) censée représenter une zone géographique ;
(b) l'obtention d'au moins une image de référence (306, 318) de la zone géographique, dans lequel la au moins une image de référence (306, 318) comprend une première image de référence (306, 318) ;
(c) l'entrée de données basées sur l'image SAR (302, 314, 320) et la au moins une image de référence (306, 318) dans un réseau neuronal artificiel formé comme classificateur (326) pour déterminer que l'image SAR (302, 314, 320) et l'image de référence (306, 318) sont de zones différentes, dans lequel l'entrée comprend :

(i) la génération d'une image de différence (902) représentant une différence entre l'image SAR (302, 314, 320) et la première image de référence (306, 318) ; et
(ii) l'entrée de l'image de différence (902) dans le réseau neuronal artificiel ; et

(d) la détection de l'erreur de géolocalisation à la suite de la détermination par le réseau neuronal artificiel du fait que l'image SAR (302, 314, 320) et la au moins une image de référence (306, 318) sont de zones différentes.

2. Procédé selon la revendication 1, dans lequel l'entrée comprend en outre l'entrée de l'image SAR (302, 314, 320) et de la au moins une image de référence (306, 318) dans le réseau neuronal artificiel, dans lequel la au moins une image de référence (306, 318) comprend la première image de référence (306, 318) et une seconde image de référence, dans lequel la seconde image de référence comprend l'image de différence (902) représentant la différence entre l'image SAR (302, 314, 320) et la première image de référence (306, 318).

**3.** Procédé selon la revendication 2, comprenant en outre :

(e) la génération d'une image composite à trois bandes en fausses couleurs (904) à partir de l'image SAR (302, 314, 320) et des première (306, 318) et seconde images de référence ; et

(f) l'entrée de l'image SAR (302, 314, 320) et de la au moins une image de référence (306, 318) dans le réseau neuronal artificiel en entrant l'image composite en fausses couleurs (904) dans le réseau neuronal artificiel.

**4.** Procédé selon l'une quelconque des revendications 1 à 3, dans lequel le réseau neuronal artificiel comprend un réseau neuronal convolutif.

**5.** Procédé selon l'une quelconque des revendications 1 à 4, dans lequel l'obtention de l'image SAR (302, 314, 320) et de la au moins une image de référence (306, 318) comprend respectivement la sélection de l'image SAR (302, 314, 320) en tant que tuile SAR (324 a-n) et de la au moins une image de référence (306, 318) en tant qu'au moins une tuile de référence (324 a-n) à partir d'une ou plusieurs images plus grandes (320).

**6.** Procédé selon la revendication 5, dans lequel les une ou plusieurs images plus grandes (320) comprennent une première image détectée à distance au sol à partir de laquelle la tuile SAR (324 a-n) est sélectionnée et une seconde image détectée à distance au sol à partir de laquelle une première tuile de référence (324 a-n) de la au moins une tuile de référence (324 a-n) est sélectionnée.

**7.** Procédé selon la revendication 6, dans lequel :

(g) la tuile SAR (324 a-n) comprend moins d'une limite de zone d'arrière-plan de zone d'arrière-plan ;

(h) une tuile de modèle numérique d'élévation (MNE) (324 a-n), sélectionnée à partir d'une image MNE plus grande (310) et correspondant en emplacement à la tuile SAR (324 a-n) et à la première tuile de référence (324 a-n), ne comprend pas plus qu'une première limite d'élévation représentant des parties de la tuile MNE (324 a-n) supérieures à un seuil d'élévation supérieur ; et

(i) la tuile MNE (324 a-n) comprend au plus une seconde limite d'élévation représentant des parties de la tuile MNE (324 a-n) inférieures à un seuil d'élévation inférieur.

**8.** Procédé selon la revendication 6, dans lequel la tuile SAR (324 a-n), la première tuile de référence (324 a-n) et la tuile MNE (324 a-n) partagent respectivement un index de tuile indexant un emplacement de la tuile SAR (324 a-n), de la première tuile de référence (324 a-n) et de la tuile MNE (324 a-n), et comprenant en outre :

(j) la détermination d'un score de tuile pour l'indice de tuile, comprenant :

(i) la détermination d'un premier terme de score à partir d'une valeur de rétrodiffusion de la première tuile de référence (324 a-n), dans lequel un premier poids est attribué au premier terme de score lorsque la valeur de rétrodiffusion pour un pourcentage de la première tuile de référence (324 a-n) est dans une plage de rétrodiffusion et un second poids est par ailleurs attribué au premier terme de score, dans lequel le premier poids est supérieur au second poids ;

(ii) la détermination d'un poids d'indice de tuile, dans lequel une première valeur est attribuée au poids d'indice de tuile si :

(A) une valeur moyenne de la première tuile de référence (324 a-n) est inférieure à une valeur moyenne de la seconde image détectée à distance au sol ;

(B) une valeur moyenne de la tuile SAR (324 a-n) est inférieure à une valeur moyenne de la première image détectée à distance au sol,

et dans lequel une seconde valeur est par ailleurs attribuée au poids d'indice de tuile, dans lequel la seconde valeur est supérieure à la première valeur ;

(iii) la détermination d'un coefficient de variation pour la tuile SAR (324 an) ;

(iv) la détermination d'un coefficient de variation pour la première tuile de référence (324 a-n) ; et

(v) la détermination du score de tuile pour l'indice de tuile comme le premier terme de score ajouté à une somme de la variation de coefficient pour la tuile SAR (324 a-n) et du coefficient de variation pour la première tuile de référence, dans lequel la somme est pondérée par le poids d'indice de tuile ;

(k) la comparaison du score de tuile aux scores de tuile pour d'autres indices de tuile respectifs de tuiles (324 a-n) sélectionnées à partir de la première image détectée à distance au sol, de la seconde image détectée à distance au sol et de l'image MNE (310) ; et

(l) la détermination du fait que le score de tuile pour l'indice de tuile est supérieur à un percentile de score minimum pour tous les scores de tuile.

9. Procédé selon la revendication 8, dans lequel le percentile de score minimum est approximativement le 60$^e$ percentile, le premier poids est approximativement 99, la plage de rétrodiffusion est inférieure à environ 5 dB, le pourcentage de la première tuile de référence est compris entre environ 20 % et environ 80 %, le second poids est approximativement 1, la première valeur est approximativement 0 et la seconde valeur est approximativement 1.

10. Procédé selon l'une quelconque des revendications 5 à 9, comprenant en outre la génération et l'affichage d'une carte thermique, dans lequel la carte thermique comprend une couleur correspondant à l'erreur de géolocalisation de la tuile SAR (324 a-n) superposée sur l'image plus grande (320) à partir de laquelle la tuile SAR (324 a-n) est sélectionnée.

11. Procédé selon l'une quelconque des revendications 1 à 9, dans lequel l'image SAR (302, 314, 320) comprend une image SAR en bande X (302, 314, 320) et la au moins une image de référence (306, 318) comprend une image SAR en bande C (302, 314, 320).

12. Système de détection d'erreur de géolocalisation dans une image radar à synthèse d'ouverture (SAR) (302, 314, 320), le système comprenant :

(m) une base de données stockant l'image SAR (302, 314, 320) et au moins une image de référence (306, 318) ; et
(n) un processeur communiquant avec la base de données et configuré pour effectuer le procédé selon l'une quelconque des revendications 1 à 11.

13. Support non transitoire lisible par ordinateur sur lequel est stocké un code de programme informatique qui peut être exécuté par un processeur et qui, lorsqu'il est exécuté par le processeur, amène le processeur à exécuter le procédé selon l'une quelconque des revendications 1 à 11.

FIG. 1

**FIG. 2**

**FIG. 3**

**FIG. 4A**

**FIG. 4B**

**FIG. 4C**

EP 4 386 430 B1

FIG. 5A 320  FIG. 5B 320  FIG. 5C 320  FIG. 5D 320

FIG. 5E 318  FIG. 5F 318  FIG. 5G 318  FIG. 5H 318

EP 4 386 430 B1

FIG. 6B

FIG. 6A

FIG. 7A

FIG. 7B

FIG. 8B

FIG. 8A

FIG. 9B

FIG. 9A

FIG. 9D

FIG. 9C

**FIG. 10A**

**FIG. 10B**

FIG. 10C

FIG. 10D

FIG. 11B

FIG. 11A

902

904

FIG. 11C

FIG. 11D

EP 4 386 430 B1

**FIG. 12B**

**FIG. 12A**

904

902

**FIG. 12D**

**FIG. 12C**

FIG. 13A

FIG. 13B

FIG. 13C

FIG. 13D

**FIG. 14A**

**FIG. 14B**

EP 4 386 430 B1

**FIG. 14C**

EP 4 386 430 B1

FIG. 15A

FIG. 15B

FIG. 16A

FIG. 16B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115170406 A
- CN 110827332 A

- CN 112200845 A